# EUROPÄISCHE PATENTSCHRIFT

(11) **EP 3 010 014 B1**
(45) Veröffentlichungstag und Bekanntmachung des Hinweises auf die Patenterteilung: **07.11.2018**
(21) Anmeldenummer: 15183227.6
(22) Anmeldetag: 01.09.2015
(51) Int. Cl.: G10L 15/06, G10L 15/22, G10L 13/08

(54) **VERFAHREN ZUR INTERPRETATION VON AUTOMATISCHER SPRACHERKENNUNG**
METHOD FOR INTERPRETATION OF AUTOMATIC SPEECH RECOGNITION
PROCEDE D'INTERPRETATION DE RECONNAISSANCE VOCALE AUTOMATIQUE

(30) Priorität: 14.10.2014 DE 102014114845
(43) Veröffentlichungstag der Anmeldung: 20.04.2016
(73) Patentinhaber: Deutsche Telekom AG, 53113 Bonn (DE)
(72) Erfinder: Burkhardt, Dr. Felix, 10551 Berlin (DE)
(74) Vertreter: 2K Patentanwälte Blasberg Kewitz & Reichel

(56) Entgegenhaltungen:
- EP-A2- 0 984 428
- WO-A2-2007/118020
- AYMAN ASADI ET AL: "AUTOMATIC MODELING FOR ADDING NEW WORDS TO A LARGE-VOCABULARY CONTINUOUS SPEECH RECOGNITION SYSTEM", SPEECH PROCESSING 1. TORONTO, MAY 14 - 17, 1991; [INTERNATIONAL CONFERENCE ON ACOUSTICS, SPEECH & SIGNAL PROCESSING. ICASSP], NEW YORK, IEEE, US, Bd. 1, 14. Mai 1991 (1991-05-14), Seiten 305-308, XP000245228, ISBN: 978-0-7803-0003-3

## Beschreibung

Die Erfindung betrifft ein Verfahren und Vorrichtung zur Verbesserung der Interpretation von Spracherkennungsergebnissen durch das automatisierte Auffinden von Wörtern, die seitens der Spracherkennungskomponente falsch verstanden wurden.

### Kurzfassung der Anwendung

Zur maschinellen Sprachinterpretation werden in modernen Systemen zwei große Teilschritte angewandt:
Ein Spracherkennungssystem besteht aus folgenden Bestandteilen: Einer Vorverarbeitung, die die analogen Sprachsignale in die einzelnen Frequenzen zerlegt. Anschließend findet die tatsächliche Erkennung mit Hilfe akustischer Modelle, Wörterbücher und Sprachmodellen statt.
Die Vorverarbeitung besteht im Wesentlichen aus den Schritten Abtastung, Filterung, Transformation des Signals in den Frequenzbereich und Erstellen des Merkmalsvektors.
Zur eigentlichen Spracherkennung wird ein Merkmalsvektor erstellt. Dieser besteht aus voneinander abhängigen oder unabhängigen Merkmalen, die aus dem digitalen Sprachsignal erzeugt werden. Dazu gehört neben dem schon erwähnten Spektrum vor allem das Cepstrum. Merkmalsvektoren lassen sich z.B. mittels einer zuvor zu definierenden Metrik vergleichen.

Beim Modell des Erkennungsprozesses gibt es unterschiedliche Ansätze wie Hidden-Markov-Modelle, Neuronale Netze oder Kombinationen und Ableitungen davon Das Sprachmodell versucht anschließend, die Wahrscheinlichkeit bestimmter Wortkombinationen zu bestimmen und dadurch falsche oder unwahrscheinliche Hypothesen auszuschließen. Dazu kann entweder ein Grammatikmodell unter Verwendung formaler Grammatiken oder ein statistisches Modell mit Hilfe von N-Grammen eingesetzt werden.

Wenn Grammatiken verwendet werden, handelt es sich meist um kontextfreie Grammatiken. Dabei muss allerdings jedem Wort seine Funktion innerhalb der Grammatik zugewiesen werden. Deshalb werden solche Systeme meist nur für einen begrenzten Wortschatz und Spezialanwendungen verwendet, nicht aber in der gängigen Spracherkennungssoftware für PCs.

Für die Integration von Spracherkennungssystemen gibt es bereits vordefinierte Vokabulare, die die Arbeit mit der Spracherkennung erleichtern sollen. Je besser das Vokabular auf den vom Sprecher verwendeten Wortschatz und Diktierstil (Häufigkeit der Wortfolgen) angepasst ist, desto höher ist die Erkennungsgenauigkeit. Ein Vokabular beinhaltet neben dem sprecherunabhängigen Lexikon (Fach- und Grundwortschatz) auch ein individuelles Wortfolgemodell (Sprachmodell). Im Vokabular sind alle der Software bekannten Wörter in der Phonetik und Orthografie hinterlegt. Auf diese Weise wird ein gesprochenes Wort an seinem Klang durch das System erkannt. Wenn sich Wörter in Bedeutung und Schreibweise unterscheiden, aber gleich klingen, greift die Software auf das Wortfolgemodell zurück. In ihm ist die Wahrscheinlichkeit definiert, mit der bei einem bestimmten Benutzer ein Wort auf ein anderes folgt.
Darüber hinaus ist folgender Stand der Technik bekannt:
- Spracherkennungsverfahren DE102010040553A1
- Real-time automated interpretation of clinical narratives AU002012235939A1
- Spracherkennung in zwei Durchgängen mit Restriktion des aktiven Vokabulars DE000060016722T2

Sehr viele Patente behandeln dabei das Finden von Synonymen, hier eine kleine Auswahl:
- A method and system for adapting synonym resources to specific domains AU000200193596A
- English synonym and antonym inquiring and recognizing device CN000202887493U
- Synonym expansion method and device both used for text duplication detection
   CNOOO 1 02650986A
- Datenbank Suche mittels Synonymgruppen EP000002506161A1
- SYNONYM CONVERSION SYSTEM, SYNONYM CONVERSION METROD AND SYNONYMCONVERTING PROGRAM JP002009230173A

### [1] Mining the Web for synonyms: PMI-IR versus LSA on TOEFL, P. Tumey, 2001, Proceedings of the Twelfth European Conference on Machine Learning (ECML-2001)

In der EP 0 984 428 A2 geht es um die Verbesserung des Aussprachelexikons eines Spracherkenners als auch eines Sprachsynthetisators. Dafür werden Aussprachevarianten einer Graphemfolge erzeugt, also eine Graphen-nach-Phonem Umwandlung.

Ferner gibt es grundsätzlich zwei Arten der Spracherkennung mit Interpretation:
In dem ersten und historisch älteren Fall können nur bestimmte Eingaben erkannt werden, die in einer sogenannten "Grammatik" definiert werden.

Im zweiten Fall, der statistischen Erkennung, werden die möglichen Eingaben nicht im Vorhinein festgelegt, sondern es kann durch Sammlungen sehr großer verschrifteter Sprachkorpora prinzipiell jede mögliche Äußerung innerhalb einer Sprache erkannt werden. Dies hat den Vorteil, dass der Designer der Anwendung sich nicht im Vorfeld überlegen muss, welche Äußerungen der Benutzer äußern wird.

Der Nachteil besteht darin, dass der Text in einem zweiten Schritt noch interpretiert werden muss(sofern bei der Anwendung die Spracheingabe zu Aktionen führen soll), wohingegen bei der Grammatik-basierten Erkennung die Interpretation direkt in der Grammatik festgelegt werden kann.

Die hier beschriebene Erfindung bezieht sich auf das zweite Verfahren, der unbegrenzten Erkennung, da nur hier ein Match zwischen dem Erkennungsergebnis und der Interpretation hergestellt werden muss.

### Stand der Technik: Sprachsynthese

### Sprachsynthetisatoren erzeugen aus einem Eingabetext und einem Parametersatz zur Sprachbeschreibung ein akustisches Sprachsignal

Es gibt traditionell folgende verschiedene Ansätze:
- Parametrische Synthetisatoren erzeugen das Signal aus Sprachmodellen, sie sind dabei flexibel in Bezug auf allgemeine Sprechermodellierung, wobei die Signalqualität allerdings oft von geringerer Güte ist. Parametrische Synthetisatoren arbeiten meist nach dem Quelle-Filter-Modell. Dabei schickt ein Signalgenerator ein Eingangssignal an einen linearen Filter. Der Filter modelliert dabei die Übertragungsfunktion des Vokaltrakts. In der parametrischen Synthese unterscheidet man Formantsynthese und Synthese nach linearer Prädiktion. Möglichkeiten und Grenzen der parametrischen Synthese, aber auch der parametrischen Signalübertragung werden hier genannt. Dabei wird die historische Entwicklung anhand einiger Beispiele parametrischer Synthetisatoren aufgezeigt. Darunter fällt auch artikulatorisch basierte Sprachsynthese, die weniger in der Praxis als für Grundlagenforschung angewandt wird.
- Verkettende Synthetisatoren erzeugen das Sprachsignal durch Verkettung passender Sprachteile aus sehr großen Datenbanken. Die Sprachqualität ist dabei innerhalb der Domäne der Datenbank recht gut, allerdings wird genau der Sprecher modelliert, von dem die Datenbank stammt. Daher sind unterschiedliche Domänen zu berücksichtigen und bereitzustellen. Ein solches System besteht in einer möglichen Ausführungsform aus den folgenden Modulen: Symbolverarbeitung, Verkettung, akustische Synthese sowie die Prosodiesteuerung, welche parallel arbeitet und die anderen Module mit Zusatzinformationen versorgt. Die Symbolverarbeitung arbeitet auf der Ebene textlicher und phonetischer Symbole. Das Verkettungsmodul wandelt einen annotierten phonetischen Text, also eine diskrete Zeichenkette, in einen kontinuierlichen Datenstrom akustischer Parameter um. Um die menschliche Artikulation beim Sprechen adäquat nachbilden zu können, sind insbesondere Lautübergänge und Koartikulationseffekte zu beachten. Der akustische Synthetisator erzeugt aus den Parametern das Sprachsignal. Oberstes Prinzip bei der Beurteilung des synthetischen Signals sind Verständlichkeit und Natürlichkeit. Große Bedeutung erlangte hier das PSOLA-Verfahren, das es ermöglicht, Dauer und Melodie gesprochener Sprache unabhängig von deren anderen akustischen Eigenschaften zu manipulieren. Um die Natürlichkeit synthetisch erzeugter Sprache weiter zu erhöhen, wurden Systeme entwickelt, die nach dem Prinzip der Unit Selection arbeiten. Grundlage solcher Systeme sind sehr große Korpora/Domänen natürlich sprachlicher Äußerungen, aus denen mit Hilfe eines Algorithmus die optimalen Bausteine bzgl. der zu erzeugenden Zieläußerung ausgewählt werden.

Vor allem das zweite Verfahren ist vorzugsweise geeignet, verständliche und menschenähnliche Sprachsignale von nahezu beliebigem Inhalt hervor zu bringen.
Ein System kann dabei mehrere Sprechstimmen simulieren, im Falle der parametrischen Synthese indem sprecherspezifische Parameter verändert werden, im Falle der verkettenden Synthese durch Verwendung von Sprachmaterial unterschiedlicher Sprecher. Im Sinne der Erfindung ist es hilfreich, den Spracherkenner mit unterschiedlichen Sprechstimmen zu konfrontieren, um eine möglichst große Menge der Sprechstimmen potentieller Nutzer abzubilden.

Unter Sprachsynthese/Sprachsynthetisierung versteht man somit die künstliche Erzeugung der menschlichen Sprechstimme. Ein Text-to-Speech-System (TTS) (oder Vorleseautomat) wandelt Fließtext in eine akustische Sprachausgabe. Somit lassen sich die oben genannten zwei Ansätze zur Erzeugung von Sprachsignalen unterscheiden. Zum einen kann durch die sogenannte Signalmodellierung auf Sprachaufnahmen (Samples) zurückgegriffen werden. Zum anderen kann das Signal aber auch durch die sogenannte physiologische (artikulatorische) Modellierung vollständig im Rechner erzeugt werden. Während die ersten Systeme auf Formantsynthesen beruhten, basieren die zurzeit industriell eingesetzten Systeme vorwiegend auf Signalmodellierung.

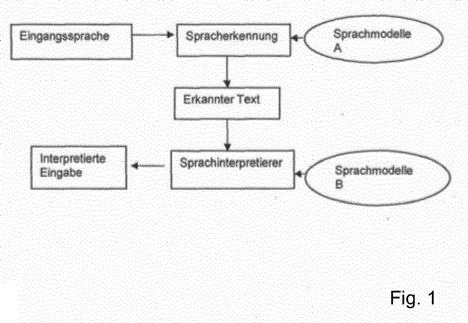

Beim Stand der Technik in der vorliegenden Umgebung wird zunächst durch einen Spracherkenner das gesprochene Audiosignal in eine Menge von Wörtern umgewandelt.
In einem zweiten Schritt wird durch einen Interpretierer diese Menge von Wörtern in eine Handlungsanweisung für die weitere maschinelle Verarbeitung überführt.
Als Beispiel führt die Sprachäußerung "was läuft heute im Kino" zu einer Datenbanksuche im heutigen Kinoprogramm. Technisch geschieht dies dadurch, dass die Schlüsselwortketten "heute" und "Kino" mit dem Datum des jeweiligen Tages und dem Kinoprogramm durch eine Regelstruktur verknüpft sind.
Dabei spricht man innerhalb einer bestimmten Anwendung von der "Wissensdomäne" (kurz "Domäne"), für eine Kinoauskunft wäre dies beispielsweise "Filme, Schauspieler und Kinos", für ein Navigationssystem die "Straßen und Ortsnamen", etc.
Wie in Fig. 1 zu sehen ist, benötigen sowohl der Spracherkenner als auch der Interpretierer als Datenbasis zum "Training" ihrer Funktion Sprachmodelle, also Wortlisten oder Vokabularien, die aus bestimmten Domänen gewonnen wurden.
Ein Problem entsteht dann, wenn beide Komponenten durch unterschiedliche Domänen trainiert wurden bzw. es bei der Verschriftung der Wortlisten Fehler gab, so führt beides dazu, dass ein "Matching" (also Zuweisung) des Spracherkennungsergebnis mit den Schlüsselwörtern nicht mehr stattfindet.
Als Beispiel sei hier der Name des Sängers "Herbert Grönemeyer" aufgeführt, dessen Verschriftung, für einen der am meisten genutzten Spracherkenner deutschlandweit (der Google Dienst), in "Herbert Grönemeier" (mit "i" anstatt "y") resultiert.

### Überblick über die Erfindung

Die Aufgabe der Erfindung liegt in der Überwindung der oben genannten Nachteile.
Der erfinderische Gedanke besteht nun darin, dass die zu erkennenden Worte automatisiert durch einen Sprachsynthetisator dem Spracherkenner zugeführt werden und die Ergebnisse, so sie sich denn dann von der Eingabe unterscheiden, dann als Synonyme bzw. Äußerungsvarianten dem Interpretierer zugänglich gemacht werden.
Gelöst wird die Erfindung somit durch ein Verfahren und eine Vorrichtung nach den Ansprüchen. Insbesondere eine Vorrichtung zur automatisierten Verbesserung von digitaler Sprachinterpretation auf einem Rechnersystem. Dieser umfasst einen Spracherkenner, (mit Sprachmodell A) der digital eingegeben Sprache erkennt. Weiterhin ist ein Sprachinterpreter (mit Sprachmodell B) vorgesehen, der die Ausgabe des Spracherkenners als Eingabe übernimmt, der Sprachinterpreter verwaltet in einer Datenbank ein digitales Vokabular mit Schlüsselwörtern und deren Synonymen, um eine spezifische Funktion anzustoßen.
Ein Sprachsynthetisator wird verwendet, der automatisch die Schlüsselwörter synthetisiert, also als Audiowiedergabe, dem Spracherkenner zugeführt, um dessen Ausgabe dann als weitere Synonyme in die Datenbank des Sprachinterpreters einzufügen, wenn diese sich von den Schlüsselwörtern oder deren Synonymen unterscheiden. Es erfolgt somit eine rekursive Fütterung der Systeme. Die Systeme sind Rechner mit Speicher und Prozessoren, auf denen bekannte Betriebssysteme arbeiten.

In einer weiteren Ausführungsform wird der Sprachsynthetisator so konfiguriert, dass die Schlüsselwörter zyklisch mit unterschiedlichen Sprecherparametern synthetisiert werden. Wobei die Parameter folgende Parameter umfassen: Alter des Sprechers, Geschlecht des Sprechers, Akzent des Sprechers, Stimmhöhe des Sprechers, Lautstärke, Sprachfehler des Sprechers, emotionaler Zustand des Sprechers, andere Aspekte sind natürlich denkbar.

Auch unterschiedliche Sprachsynthetisator können eingesetzt werden, vorzugsweise einer oder mehrere der folgenden: ein verkettender Synthetisator, ein parameterischer Synthetisator. In Abhängigkeit des Synthetisators wird entweder mit unterschiedlichen Domänen oder Parametern gearbeitet, wobei eine andere Domäne auch für einen anderen Parameter stehen soll.

Das automatisch zyklische Synthetisieren der Schlüsselwörter ist abhängig von Ereignissen. So können neue Schlüsselwörter, veränderter Synthetisator, Ablauf einer Zeitdauer als Ereignisse dienen, aufgrund derer die Datenbank mit den Schlüsselwörtern wieder synthetisiert wird, um neue Begriffe zu erhalten.

Bis dato verwenden technische Systeme, die Nutzeräußerungen und Datenbankeinträge miteinander abgleichen, also prinzipiell alle Auskunftssysteme mit Sprachzugang, für den Abgleich der Bezeichner und dem Finden von Synonymen diverse Vokabulardatenquellen, zum Teil auch einfach das Internet vgl. [1].
Der erfinderische Gedanke besteht nun darin, dass die zu erkennenden Worte automatisiert durch einen Sprachsynthetisator dem Spracherkenner zugeführt werden und die Ergebnisse, so sie sich denn dann von der Eingabe unterschieden, dann als Synonyme bzw. Äußerungsvarianten dem Interpretierer zugänglich gemacht werden. Dies verbessert den Abgleich zwischen Nutzeräußerung und Datenbankeintrag.
Da dieser Vorgang komplett automatisiert abläuft, ist er kostengünstig in ein Gesamtsystem zu integrieren.
Figurenbeschreibung :
Figur 1 zeigt ein klassisches Sprachmodell
Figur 2 zeigt den Ablauf der vorliegenden Erfindung

Beschreibung der Ausführungsform:
Für die Steuerung eines Auskunftssystems, das beispielsweise über ein Smartphone oder eine Heimanlage zugänglich ist, muss die Interpretation sprachlich-stimmlich eingegebener Befehle bzw. Anweisungen in Computer-Anweisungen erfolgen. Im Falle eines Auskunftssystems gibt es dabei eine begrenzte Anzahl von Wörtern, die der Nutzer äußern kann, nämlich die Bezeichner für die Informationsinhalte an denen er interessiert ist. Diese müssen mit den Bezeichnern der Informationsinhalte in der Datenbank abgeglichen werden. Dabei können an zwei Stellen Probleme auftreten:
a) der Nutzer verwendet zur Bezeichnung der Informationsinhalte andere Bezeichner als die Datenbank
b) die automatische Spracherkennung missversteht den Nutzer und die Bezeichner können deshalb nicht abgeglichen werden.

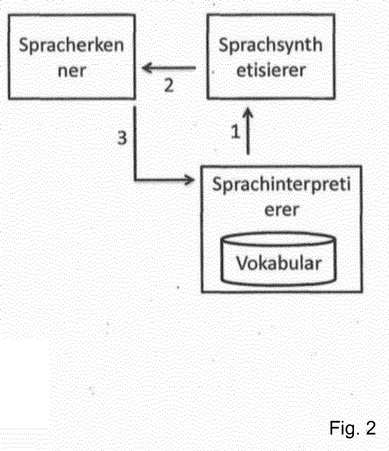

Für beide Fälle ist es hilfreich, dem Datenbankeintrag alternative Bezeichner, sogenannte Synonyme, beiseite zu stellen. Synonyme stellen damit einen sehr zentralen Bestandteil eines solchen Informationssystems da.
Die hier beschriebene Erfindung erzeugt dabei Synonyme völlig automatisiert, indem die Einträge der Datenbank in verschiedenen Stimmen von einem Sprachsynthetisator erzeugt und einem Spracherkenner zugeführt werden. Dabei werden alternative orthographische Repräsentationen vom Spracherkenner zurück geliefert. Diese werden als Synonyme genutzt und erleichtern somit den Abgleich zwischen Nutzeräußerung und Datenbankeintrag. Der Vorgang ist in Fig. 2 dargestellt.

### Ausführungsbeispiel 1

### Kinoauskunft;

Als konkrete Ausführung dieser Erfindung soll im Folgenden ein System zur Kinoauskunft beschrieben werden.

Das aktuelle Kinoprogramm wird jede Nacht um 3:00 für die kommenden zwei Wochen dem System bekannt gegeben, inklusive der Schauspielernamen. Das System sendet alle Schauspielernamen an den Spracherkenner, im Falle von "Herbert Grönemeyer" erhält es "Herbert Grönemeier" als Antwort. Da sich der Nachname hierbei unterscheidet, wird er dem Vokabular als Synonym hinzugefügt. Wenn dann danach ein Nutzer "Filme mit Herbert Grönemeyer" sagt, kann die Interpretation den richtigen Schauspieler zuordnen, obwohl der Erkenner ein Ergebnis mit unterschiedlicher Orthographie zurück geliefert hat.

### Ausführungsbeispiel 2

### Autoscout24 Sprachsuche

Ein weiteres Ausführungsbeispiel betrifft die Sprachsuche der Autoscout24 Datenbank für gebrauchte Autos.

Die Namen der Modelle werden regelmäßig im Sprachinterface System von der Datenbank aktualisiert, um die Vokabulare aktuell zu halten. Während der Aktualisierung werden die Namen der Modelle durch einen Sprachsynthetisator erzeugt und dem Spracherkenner zugeführt, dabei wird beispielsweise der Modellname "Healey" als "Heli" erkannt und der Eintrag "Heli" dann dem Eintrag für das Modell "Healey" als Synonymwort hinzugefügt.

### Ergänzende Materialien

Nachfolgend sind einige ergänzende Informationen beigefügt, die das Anwendungsszenario verdeutlichen und illustrieren soll.

In Fig. 2 ist die Wirkungsweise der Erfindungsidee schematisch dargestellt. Die ursprünglich vorhandenen Schlüsselwörter werden dem Sprachsynthetisator zugeführt (1) dieser synthetisiert daraus Sprach Audiodaten. Diese werden dem Spracherkenner übermittelt (2), der einen erkannten Text an den Sprachinterpretierer gibt (3). Unterscheiden sich die zurück erhaltenen Schlüsselwörter von den ursprünglich übermittelten Textdaten, so werden sie als Synonyme dem Vokabular hinzugefügt.

## Patentansprüche

1. Vorrichtung zur automatisierten Verbesserung von digitaler Sprachinterpretation auf einem Rechnersystem; mit einem Spracherkenner mit Sprachmodell A, der digital eingegebene Sprache erkennt,
mit einem Sprachinterpreter mit Sprachmodell B, der die Ausgabe des Spracherkenners als Eingabe übernimmt, der Sprachinterpreter verwaltet in einer Datenbank ein digitales Vokabular mit Schlüsselwörtern und deren Synonymen, um eine spezifische Funktion anzustoßen, wobei ein Synonym als eine Äußerungsvariante eines Schlüsselwort zu verstehen ist,
ein Sprachsynthetisator, der automatisch die Schlüsselwörter synthetisiert dem Spracherkenner als Audiodaten zugeführt, um dessen Ausgabe dann als weitere Synonyme in die Datenbank des Sprachinterpreter in Bezug auf die Schlüsselwörter einzufügen, wenn diese sich von den Schlüsselwörtern oder deren Synonymen unterscheiden.

2. Vorrichtung nach dem vorhergehenden Anspruch, das Verfahren nach dem vorhergehenden Anspruch, wobei der Sprachsynthetisierer konfiguriert ist, um auch die Synonyme synthetisiert dem Spracherkenner zuzuführen, um bei Abweichungen neue Synonyme in die Datenbank einzutragen.

3. Vorrichtung nach einem oder mehreren der vorhergehenden Ansprüche, wobei der Sprachsynthetisator konfiguriert ist, die Schlüsselwörter zyklisch mit unterschiedlichen Sprecherparametern zu synthetisieren, umfassend folgende Parameter: Alter des Sprechers, Geschlecht des Sprechers, Akzent des Sprechers, Stimmhöhe des Sprechers, Lautstärke, Sprachfehler des Sprechers, emotionaler Zustand des Sprechers.

4. Vorrichtung nach einem oder mehreren der vorhergehenden Ansprüche, wobei unterschiedliche Sprachsynthetisatoren eingesetzt werden, vorzugsweise einer oder mehrere der folgenden: ein verkettender Synthetisator, ein parametrischer Synthetisator.

5. Vorrichtung nach einem oder mehreren der vorhergehenden Ansprüche, wobei das automatisch zyklische synthetisieren der Schlüsselwörter abhängig von Ereignissen ist: veränderte Schlüsselwörter, veränderte Synthetisatoren, Ablauf einer Zeitdauer.

6. Verfahren zur automatisierten Verbesserung von digitaler Sprachinterpretation auf einem Rechnersystem; mit einem Spracherkenner mit Sprachmodell A, der digital eingegebenen Sprache erkennt,
mit einem Sprachinterpreter mit Sprachmodell B, der die Ausgabe des Spracherkenners als Eingabe übernimmt, der Sprachinterpreter verwaltet in einer Datenbank ein digitales Vokabular mit Schlüsselwörtern und deren Synonymen, um eine spezifische Funktion anzustoßen, wobei ein Synonym als eine Äußerungsvariante eines Schlüsselwort zu verstehen ist,
ein Sprachsynthetisator, der Schlüsselwörter automatisch in gesprochenen Text umwandelt, **gekennzeichnet durch** die folgenden Schritte:
- der Sprachsynthetisator greift auf die Schlüsselwörter in der Datenbank zu und wandelt automatisch die Schlüsselwörter in gesprochene Sprache als Audiodaten um, um diese dann durch den Spracherkenner erkennen zu lassen, um diese als weitere Synonyme in die Datenbank des Sprachinterpreters in Bezug auf die Schlüsselwörter einzufügen, wenn diese sich von den Schlüsselwörtern oder deren Synonymen unterscheiden.

7. Verfahren nach dem vorhergehenden Anspruch, das Verfahren nach dem vorhergehenden Anspruch, wobei der Sprachsynthetisierer konfiguriert ist, um auch die Synonyme synthetisiert dem Spracherkenner zuzuführen, um bei Abweichungen neue Synonyme in die Datenbank einzutragen.

8. Verfahren nach einem oder mehreren der vorhergehenden Ansprüche, wobei der Sprachsynthetisator konfiguriert ist, die Schlüsselwörter zyklisch mit unterschiedlichen Sprecherparametern zu synthetisieren, umfassend folgende Parameter: Alter des Sprechers, Geschlecht des Sprechers, Akzent des Sprechers, Stimmhöhe des Sprechers, Lautstärke, Sprachfehler des Sprechers, emotionaler Zustand des Sprechers.

9. Verfahren nach einem oder mehreren der vorhergehenden Verfahrensansprüche, wobei unterschiedliche Sprachsynthetisatoren eingesetzt werden, vorzugsweise einer oder mehrere der Folgenden: ein verkettender Synthetisator, ein parameterischer Synthetisator.

10. Verfahren nach einem oder mehreren der vorhergehenden Verfahrensansprüche, wobei das automatisch zyklische Synthetisieren der Schlüsselwörter abhängig von Ereignissen ist: veränderte Schlüsselwörter, veränderte Synthetisatoren, Ablauf einer Zeitdauer.

## Claims

1. Device for the automated improvement of digital speech interpretation on a computer system; with a speech recognizer with speech model A, which recognizes a digitally entered language,
with a speech interpreter with speech model B, which takes the output of the speech recognizer as input, the speech interpreter manages in a database a digital vocabulary with keywords and their synonyms to trigger a specific function, wherein a synonym is to be understood as an utterance variant of a keyword,
a speech synthesizer that automatically synthesizes the keywords and sends them to the speech recognizer as audio data to insert their output as additional synonyms in the speech interpreter's database with respect to the keywords if they differ from the keywords or their synonyms.

2. Device according to the preceding claim, wherein the speech synthesizer is configured also to feed the synonyms synthesized to the speech recognizer in order to enter new synonyms in the database in case of deviations.

3. Device according to one or more of the preceding claims, wherein the speech synthesizer is configured to synthesize the keywords cyclically with different speaker parameters, comprising the following parameters: Speaker age, speaker's gender, speaker's accent, speaker's pitch, speaker's volume, speaker's speech impediment, speaker's emotional state.

4. Device according to one or more of the preceding claims, using different speech synthesizers, preferably one or more of the following: a concatenating synthesizer, a parametric synthesizer.

5. Device according to one or more of the preceding claims, wherein the automatically cyclic synthesizing of keywords being dependent on events: changed keywords, changed synthesizers, expiration of a period.

6. Method for the automated improvement of digital speech interpretation on a computer system; with a speech recognizer with speech model A, which recognizes digitally entered speech,
with a speech interpreter with speech model B, which takes the output of the speech recognizer as input, the speech interpreter manages in a database a digital vocabulary with keywords and their synonyms to trigger a specific function, wherein a synonym is to be understood as an utterance variant of a keyword,
a speech synthesizer that automatically converts keywords into spoken text, **characterized by** the following steps:
the speech synthesizer accesses the keywords in the database and automatically converts the keywords into spoken language as audio data, which the speech recognizer then recognizes and adds to the speech interpreter's database as additional synonyms in relation to the keywords if these differ from the keywords or their synonyms.

7. Method according to the preceding claim, wherein the speech synthesizer is configured to also synthesize the synonyms and provide the speech recognizer with new synonyms in the event of deviations.

8. The method according to one or more of the preceding claims, wherein the speech synthesizer is configured to synthesize the keywords cyclically with different speaker parameters, comprising the following parameters: Speaker age, speaker's gender, speaker's accent, speaker's pitch, speaker's volume, speaker's speech impediment, speaker's emotional state.

9. The method according to one or more of the preceding claims, using different speech synthesizers, preferably one or more of the followings: a concatenating synthesizer, a parametric synthesizer.

10. The method according to one or more of the preceding method claims, wherein the automatically cyclic synthesizing of the keywords being dependent on events: changed keywords, changed synthesizers, expiration of a period.

## Revendications

1. Un appareil pour l'amélioration automatisée de l'interprétation de la parole numérique sur un système informatique;
avec un dispositif de reconnaissance vocale doté d'un modèle vocal A, qui reconnait une parole saisie de manière numérique ;
avec un dispositif d'interprétation vocale doté d'un modèle vocale B, lequel prend la sortie du dispositif de reconnaissance vocale, le dispositif d'interprétation vocale gérant dans une base de données un vocabulaire numérique avec des mots-clés et leurs synonymes pour déclencher une fonction spécifique, dans lequel un synonyme est compris comme étant un énoncé variant d'un mot clé ;
un dispositif de synthèse vocale qui effectue automatiquement une synthèse des mots clés et les transmets au dispositif de reconnaissance vocale sous forme de données audio pour insérer sa sortie en tant que synonymes supplémentaires dans la base de données du dispositif d'interprétation vocale s'ils diffèrent des mots-clés ou de leurs synonymes.

2. Le dispositif selon la revendication précédente, dans lequel le dispositif de synthèse vocale est configuré pour également synthétiser les synonymes fournis au dispositif de reconnaissance vocale pour entrer de nouveaux synonymes dans la base de données en cas de divergences.

3. Le dispositif selon l'une ou plusieurs des revendications précédentes, dans lequel le dispositif de synthèse vocale est configuré pour synthétiser cycliquement les mots-clés avec différents paramètres de locuteur, comprenant l'âge du locuteur, le sexe du locuteur, l'accentuation du locuteur, le timbre du locuteur, le volume du locuteur, l'état émotionnel du locuteur.

4. Le dispositif selon l'une ou plusieurs des revendications précédentes, dans lequel différents dispositifs de synthèse vocale sont utilisés, de préférence un ou plusieurs des éléments suivants: un synthétiseur de liaison, un synthétiseur paramétrique.

5. Le dispositif selon l'une ou plusieurs des revendications précédentes, dans lequel la synthèse automatique cyclique des mots-clés dépend d'événements: mots-clés modifiés, synthétiseurs modifiés, expiration d'une période de temps.

6. Un procédé pour l'amélioration automatisée de l'interprétation de la parole numérique sur un système informatique;
avec un dispositif de reconnaissance vocale doté d'un modèle vocal A, reconnaissant un message vocale saisie sous forme numérique,
avec un dispositif d'interprétation vocale doté d'un modèle vocale B, prenant la sortie du dispositif de reconnaissance vocale en entrée, le dispositif d'interprétation vocale gère dans une base de données un vocabulaire numérique avec des mots-clés et leurs synonymes pour déclencher une fonction spécifique, dans lequel un synonyme est compris comme étant un énoncé variant d'un mot clé ;
un dispositif de synthèse vocale qui convertie automatiquement des mots clés en texte parlé, **caractérisé par** les étapes suivantes :
le dispositif de synthèse vocale accède aux mots-clés dans la base de données et convertit automatiquement les mots-clés en langue parlée sous forme de données audio, que le système de reconnaissance vocale reconnaît ensuite et ajoute à l'intérieur de la base de données du dispositif d'interprétation vocale comme synonymes supplémentaires en relation avec les mots clés s'ils sont différents des mots-clés ou de leurs synonymes.

7. Le procédé selon la revendication précédente, dans lequel le dispositif de synthèse vocale est configuré pour également synthétiser les synonymes fournis au dispositif de reconnaissance vocale pour entrer de nouveaux synonymes dans la base de données en cas de divergences.

8. Le procédé selon une ou plusieurs des revendications précédentes, dans lequel le dispositif de synthèse vocale est configuré pour synthétiser cycliquement les mots-clés avec différents paramètres d'élocuteur, comprenant les paramètres suivants : l'âge du locuteur, le sexe du locuteur, l'accent du locuteur, le timbre du locuteur, le volume du locuteur, l'état émotionnel du locuteur.

9. Le procédé selon l'une ou plusieurs des revendications de procédé précédentes, utilisant plusieurs dispositifs de synthèse vocates, de préférence un ou plusieurs des éléments suivants: un synthétiseur de liaison, un synthétiseur paramétrique.

10. Le procédé selon l'une ou plusieurs des revendications de procédé précédentes, dans lequel la synthèse cyclique automatique dépend d'événements: mots-clés modifiés, synthétiseurs modifiés, expiration d'une période de temps.
